# EUROPEAN PATENT SPECIFICATION

(11) **EP 1 464 163 B1**
(45) Date of publication and mention of the grant of the patent: **05.01.2011**
(21) Application number: 02781303.9
(22) Date of filing: 04.11.2002
(51) Int. Cl.: H04N 7/173, H04L 12/26

(54) **Module and process for use with inter-user communication via a bidirectional network**
Bauteil und Verfahren zur Verwendung bei der Kommunikation zwischen Benutzern über ein bidirektionales Netzwerk
Module et procédé applicable à la communication inter-utilisateurs par réseau bidirectionnel

(30) Priority: 08.11.2001 FR 0114444
(43) Date of publication of application: 06.10.2004
(73) Proprietor: Thomson Licensing, 92130 Issy-les-Moulineaux (FR)
(72) Inventor: CHAMPEL, Mary-Luc, F-35220 Marpiré (FR); LETELLIER, Philippe, F-35760 Saint Grégoire (FR)
(74) Representative: Kerber, Thierry
(86) International application number: PCT/EP2002/012287
(87) International publication number: WO 2003/041397

(56) References cited:
- EP-A- 0 859 496
- EP-A- 1 107 596
- WO-A-01/02974
- WO-A-01/05152
- WO-A-01/41446
- WO-A-01/60071
- ANDY ORAM: "Peer-to-peer: Harnessing the Benefits of a Disruptive Technology (Chapter four)" , O'REILLY & ASSOCIATES XP002208583 ISBN: 0-596-00110-X page 59 -page 60
- MOJO NATION DOCS: "Technology Overview of Mojo Nation" MOJO NATION DOCS, 14 February 2000 (2000-02-14), XP002177454

## Description

The present invention relates to a module and a process for inter-user communication over a bidirectional network (communication pathway making it possible to convey data in one direction and in the opposite direction at one and the same time), such as for example the Internet network. It deploys general sending of information, referred to as "broadcasting" (broadcasting in which said data are transmitted to all the destinations) via a broadcasting network, such as for example by radio broadcasting. The information pertains in particular to station-to-station exchanges, also referred to as P2P (standing for "Peer-to-peer") exchanges, between users equipped with televisions.

"P2P" technology enables terminals of a bidirectional network, such as the Internet network, to exchange files by communicating directly with one another, instead of the exchanges being performed between the terminals and a central server concentrating and redistributing desired information (client/server model).

The worlds of the Internet and of television are gradually converging and allow in particular the use, on one's television, of Internet applications in the same way as they are practiced on personal computers (in addition to P2P applications: navigation around the web, sending and receiving of e-mails, forums, etc).

Moreover, it is known to exploit the synergy between communications via a bidirectional network and broadcasting. Thus, patent US-5,036,518 describes a system guaranteeing the reliability of transmission of data for communications with a single origin and multiple destinations ("one-to-many") or with multiple origins and destinations ("many-to-many"), in a communications network associated with a set of stations. According to the technique described, a retransmission station receives input data from participating stations according to a mode of communication with single origins and destinations ("one-to-one"), generates a special message header and transmits the data together with header by broadcasting over the network. Various nodes of the network additionally perform various specialized functions.

In this document, however, the broadcasting network is that used for the bidirectional exchanges. This situation is not therefore suitable for the synergetic combination of two distinct networks, the one bidirectional and the other for broadcasting, but corresponds to an advantageous use of the broadcasting capabilities of a bidirectional network.

Moreover, the document EP-A-1,107,596 discloses a technique usable in a cable network, to notify the users of the presence of other users with a view to communications between them. In a particular mode of implementation, this technique relies on the sending to a network head, of prior demands from users, these demands identifying other users whose presence on the network the demander wishes to ascertain. A tagging system can be used to detect the active decoders, hence their presence on the network. The demander advised of the presence of a user can then establish an interactive communication or a discussion ("chat") therewith.

Once again, this prior document does not pertain to the synergetic combination of two distinct networks, the one bidirectional and the other for broadcasting, but is geared towards an advantageous use of a single bidirectional network.

Service providers, associating servers and radio broadcasting transmitters ("broadcasters"), can for their part combine the possibilities offered at one and the same time by the Internet network and telebroadcasting. For example they collect information from television viewers via the Internet network, process it, then broadcast the results thereof to the antenna. However, these systems are tailored for models of the client/server type when they combine the potentials of the two networks, and can only offer possibilities of the station-to-station type through conventional use of the Internet network.

Document WO-01/60071 relates to an interactive multimedia user interface using affinity based categorization. Computing devices are able to receive both TV broadcast streams via a broadcast network (e.g. satellite), and various information via a bi-directional Internet network, such information comprising notably chat dialog data. Each computing device is able to store the TV broadcast stream for later viewing. Also, it may perform a combination of Internet and TV content and services, possibly based on triggers incorporated in the TV streams at the emitter side. The resulting combination may be then broadcast to other users via the bidirectional network. A filtering of the available Internet or broadcast content is also done at the computer side or at the level of an associated server, which enables interesting adaptation of the communication to the various users.

Though effective for user friendly and adaptive interactivity on the ground of broadcast streams, that technique requires high storing and processing capacities at the end computers, for locally storing and exploiting broadcast TV streams.

Document EP-A-1 107 596 relates to a system and method for user notification and communications in a cable network.

The chapter four entitled "The Comupia of the Commons" written by D. Bricklin in the bokk "Peer-to-peer: harnessing the benefits of a disruptive technology" (O'Reilly and Assocs, pp. 59-63) discloses features of the Napster phenomenon.

Document WO01/41446 discloses a method and apparatus for communication of video between multiple users on a network.

Document EP0859496 discloses a method and system for a hybrid peer-server communications structure.

Document WO01/02974 discloses a decentralized internet-based program production system.

The present invention, which is as defined in claim 1, pertains to a module for inter-user communication over a bidirectional network, making it possible to derive full benefit from the combination of the latter network with a broadcasting network independent of the bidirectional network, for communications of the station-to-station type between users.

The communication module of the invention makes it possible more generally to adapt dynamically to requests formulated by users or to user interest centers pertaining to other users.

The invention is also defined as a communication process as set out in claim 13, having the aforesaid advantages, as well as to a server as defined in claim 9, and to a broodcasting set as defined in claim 12.

It applies in particular to the sharing and exchanging of files between users, to keyboard-chats (also referred to simply as "chats") and to forums, in particular by technologies of the P2P type.

For this purpose, the subject of the invention is a communication module for inter-user communication over a bidirectional network. This module comprises:
- a unit for receiving and transmitting information between a server and users, via the bidirectional network,
- a unit for triggering recording, in at least one storage space of the server, of at least some of the information received by the server from the users,
- and a unit for controlling a broadcasting of data stored in said storage space to the users, via a broadcasting network independent of the bidirectional network, that controlling unit being coupled to the storage space and being coupled to the broadcasting network via broadcasting means.

According to the invention said module also comprises a unit for monitoring connection of the users to the server via the bidirectional network.

The communication module of the invention thus comprises means for ascertaining the ever-changing dynamic topology of the bidirectional network (through the intermediary of the return channel), and does not focus solely on the contents of the messages received. The recordings of information or the broadcasts are subject to this topology. Surprisingly, the introduction of this complementary concept offers hitherto inconceivable possibilities, in particular in respect of the exchanging of files and in respect of communications between users, as will become apparent hereinbelow.

By comparison with the document EP-A-1,107,596, the communication module of the invention leads to an unexpected apportioning of functions. Specifically, in an implementation centered on conversations between users (hence having applications corresponding to those of the prior document), the network surveillance information (monitoring of user connections) is transmitted to the users not via the bidirectional network, but via a broadcasting network independent of the latter. This feature contrasts with the common idea according to which information regarding third-party connections can be obtained only to the extent that one is connected oneself to the relevant (bidirectional) network.

To simplify the account, throughout what follows, the term "connection" will be understood to mean a connection of a user to the server via the bidirectional network.

In principle, the independence of the two networks, respectively bidirectional and broadcasting, is exploited to best effect by profiting from the connection information so as to execute appropriate operations at the right time. Such operations can consist in particular of a recording of data originating from a predefined user as soon as this user connects up or of a sending of relevant information via the broadcasting network concerning the real-time connections of the users, including to nonconnected users. An important advantage of the module of the invention is that the connections to the bidirectional network are not necessary in order for the system to be able to function successfully, by virtue of the combined use of the other network (for broadcasting) and of the dynamic particulars regarding the connections.

The broadcasting network can be *a priori* of any form (Ethernet, radio, satellite network, etc.). However, it is advantageously unidirectional (communication pathway which makes it possible to convey data in one direction only), and preferably consists more especially of a radio broadcasting network in the case of television. The bidirectional network is preferably the Internet. The communication module of the invention thus enables televisions with Internet access ("Internet TV") to be made especially attractive. More generally, it is advantageous for the bidirectional and broadcasting networks to be a temporary network and a permanent unidirectional network respectively.

Broadcasting does not exclude communication targeted at a user or a set of predefined users, for example by means of a recognition code or an electronic signature.

Advantageously, said unit for triggering recording is designed to update in said storage space a list of the users connected to the server. This list makes it possible to obtain a summary of the results of monitoring the connections, and therefore correspondingly simplifies the exploitation of these results.

Two branches essentially are distinguished in the implementations of the communication module of the invention. The first relates to the exchanging of files between users, and the second concerns conversations between users, be they performed between targeted users (chats) or be they conducted in a group (forums). The communication module of the invention advantageously brings together the two types of capabilities, but can also exhibit the functionalities of just one or the other of the two branches.

According to the first branch of modes of implementation, the unit for triggering recording is capable:
- of triggering the recording in the storage space of demands for files by requester users,
- and of triggering the recording in this storage space of files supplied by provider users when these provider users are connected to the server and these files are available at said provider users.

Moreover, the unit for controlling broadcasting is designed to control the sending of files recorded in the storage space to the requester users, in accordance with the demands of these requester users.

The communication module thus plays an intermediate role in respect of the exchanging of files between users, without prejudice to autonomy and flexibility of communication between individual users. It is intended for undertaking essentially in four phases:
- recording of the file demand submitted by the requester user,
- possible placing of this demand on standby until the user providing the file is connected,
- downloading of the file to the server when the provider user is connected (to the extent that the file is available)
- and sending of the file by the broadcasting network.

By virtue of this implementation, it is not necessary for the provider user to be connected at the time when the requester user formulates his demand, nor for the requester user to be connected at the time when this demand can be satisfied. Moreover, it is thus possible to avoid the lengthy waits necessary for downloading of large sized files, the broadcasting network generally exhibiting a better bandwidth and a better bit rate than the bidirectional network. Preferably, the requester user also has the possibility however, of opting for downloading via the bidirectional network. This downloading is initiated immediately if the file is already accessible, or subsequently during the requester user's next connection in the course of which this file becomes accessible.

The users are furnished with sufficient storage capabilities to allow the local recording of the files received. For example, this may for instance be Internet TV equipped with hard disks - the users may then be disconnected during those periods which are generally the longest on line, namely those for downloading. Additionally, any user can be either a requester only, or a provider only, or more generally both requester and provider at one and the same time. This last possibility is the basis for the concept of exchanges which is practiced in particular in P2P technology.

The requester user can explicitly request a desired file from an identified provider user. In another form of selection of the provider user, the requester user merely requests the file and the communication module is responsible for identifying one of the provider users able to provide this file. The communication module can itself even undertake a specific search, for example based on the title of a song or of a film.

Preferably:
- the unit for triggering recording is designed to trigger the recording in said storage space of at least one list of demands, these demands being advantageously ranked in the list of demands according to an order of receipt of the demands by the server,
- and the communication module comprises a unit for periodic scanning of this list of demands, which is capable of verifying sequentially in this list the demands which can be satisfied, by availability of the corresponding files at provider users and by connection of these provider users, and of activating the unit for triggering recording accordingly.

Such a module makes it possible to optimize the delays in satisfying the users, according to a "first in - first out" rule.

In another preferred form of satisfying the demands, the communication module verifies with each new connection of a provider user whether one or more of the demands stored can be satisfied by this user.

Advantageously:
- the unit for triggering recording is designed to trigger the recording in the storage space, supplied by provider users, of particulars regarding content and addressing of the files available at the provider users,
- and said communication module comprises a downloading unit, capable of downloading at least the particulars regarding content to the requester users on demands of these requester users.

Thus, the users can have available all the particulars necessary for ascertaining the files made available by other users, without the server being constrained to keep these files in the storage space. The particulars transmitted by the communication module may or may not include particulars regarding the address of the available files, consisting for example of identifiers of the provider users.

According to the second .branch of modes of implementation, the unit for controlling broadcasting is capable of controlling the sending of at least one list of users currently connected to the server via at least one communication service.

Thus, the set of users, whether or not they be connected to the bidirectional network, are informed in real time of the identity of the parties involved in the communications service by the broadcasting network. They may thereby decide whether they themselves also desire to participate therein, by connecting up to the server via this service - the number of potential users of the service is increased accordingly. Interactive TV applications may, in this way, be especially attractive.

In an advantageous form with broadcasting of the list of connected users, at least one of these communication services is a forum application. The unit for controlling broadcasting is then designed also to control the sending of contents exchanged via this forum service. The users are thus also informed in real time of the topics processed, and can decide with the best knowledge of the facts whether or not they desire to be involved.

Preferably said communication module is designed for a technology of station-to-station exchanges (P2P) between the users over the bidirectional network.

The invention also relates to a server, **characterized in that** it comprises a communication module in accordance with any one of the modes of implementation of the invention. That server is advantageously provided for users being able to connect to the server via at least one keyboard-chat application and/or forum application. The unit for controlling broadcasting of the communication unit is then capable of controlling the sending of at least one list of users, currently connected to the server via the keyboard-chat / forum application.

It also concerns a broadcasting set, **characterized in that** it comprises such a server. This broadcasting set therefore comprises at one and the same time means of broadcasting and of data transmission via the bidirectional network. Moreover, advantageously, that broadcasting set is intended for a radio broadcasting network, preferably a television network.

The subject of the invention is additionally a process for inter-user communication over a bidirectional network. This process comprises:
- a step of triggering recording in at least one storage space, information received by a server from users via the bidirectional network,
- and a step of controlling broadcasting of data stored in this storage space to the users, via a broadcasting network independent of the bidirectional network.

According to the invention:
- the connections of the users to the server are monitored via the bidirectional network,
- the broadcasts of data are performed via the broadcasting network independent of the bidirectional network,
- and at least one of the steps of triggering recording and of controlling broadcasting are operated as a function of the users connected to the server identified by monitoring the connections.

This communication process preferably is designed to be deployed by means of a communication module in accordance with any one of the modes of implementation of the invention.

The invention will be better understood and illustrated by means of the following exemplary implementations and deployments, which are in no way limiting, with reference to the appended figures in which:
- Figure 1 is a basic diagram of a set for broadcasting to users, comprising a radio broadcasting transmitter (broadcaster) and a server in accordance with the invention;
- Figure 2 details in the form of a block diagram a communication module in accordance with the invention of the broadcasting set of Figure 1 ;
- Figure 3 illustrates a first mode of exploitation of the broadcasting set of Figure 1, for sharing and exchanging files between users ;
- Figure 4A schematizes a first step of a control of files between users with the broadcasting set of Figure 3 (made available by a provider user) ;
- Figure 4B schematizes a second step of a control of files between users with the broadcasting set of Figure 3 (downloading of a list of files available to a requester user) ;
- Figure 4C schematizes a third step of a control of files between users with the broadcasting set of Figure 3 (demand by the requester user for a file from the provider user) ;
- Figure 4D schematizes a fourth step of a control of files between users with the broadcasting set of Figure 3 (monitoring of the connection of the provider user) ;
- Figure 4E schematizes a fifth step of a control of files between users with the broadcasting set of Figure 3 (downloading to the server of the file required from the provider user) ;
- Figure 4F schematizes a sixth step of a control of files between users with the broadcasting set of Figure 3 (transmission by radio broadcasting of the file required to the requester user) ;
- and Figure 5 illustrates a second mode of exploitation of the broadcasting set of Figure 1, for participation of the users in a communication service.

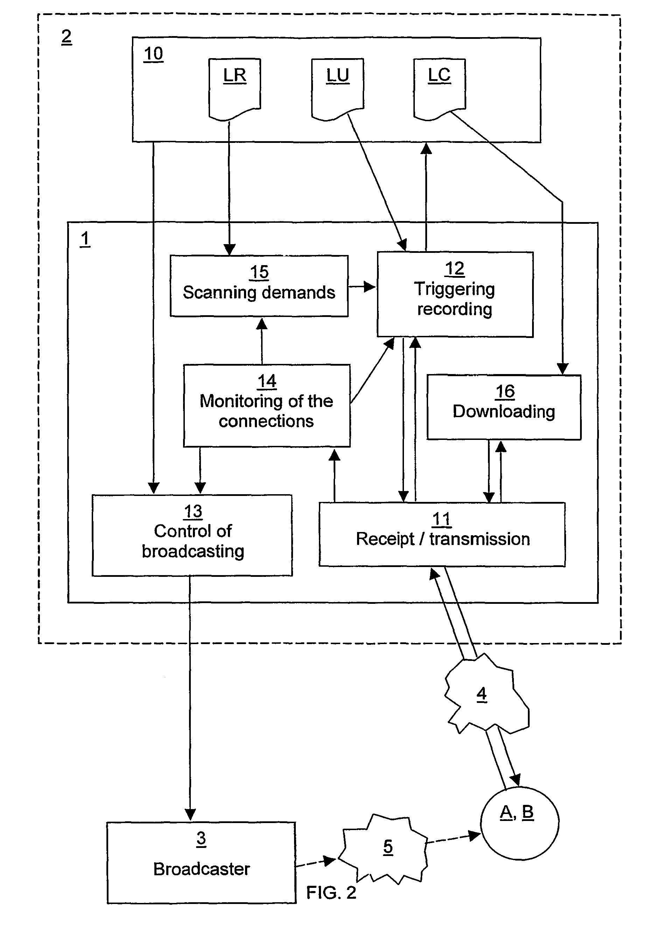

In Figure 2, the functional blocks represented do not necessarily correspond to physically distinct entities: they may constitute functionalities of one and the same component or of one and the same computer program, and likewise a functional block may be distributed among several physically distinct entities.

Additionally, in the figures, the communications via the bidirectional network are conventionally represented by solid arrows and those via the broadcasting network by dashed arrows.

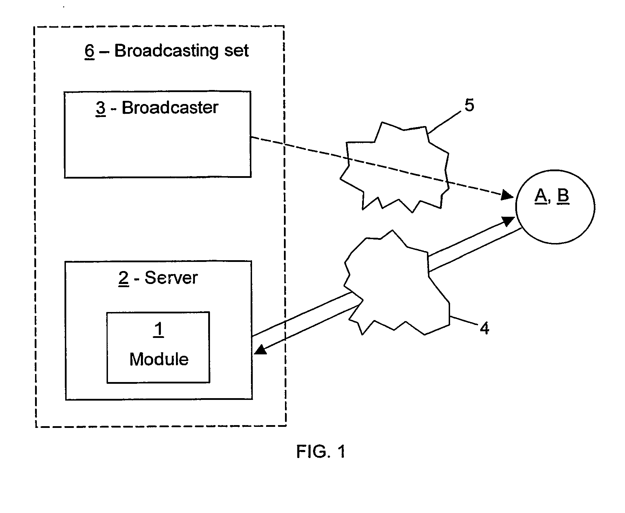

A service provider is furnished with a set 6 for broadcasting to users A, B (Figure 1), which comprises a server 2 including a communication module 1 and a broadcaster 3. The server 2 communicates with the users A, B via a bidirectional network 4, such as the Internet network, and is connected in a continuous manner to this network 4. The users A and B are connected in a temporal manner to the network 4. For its part, the broadcaster 3 transmits information to the users A, B via a broadcasting network 5. The latter is in this instance constituted by a unidirectional radio broadcasting network.

By way of example, the broadcaster 3 transmits television waves to Internet TVs, associated with the users A, B respectively.

The communication module 1 (Figure 2) more precisely comprises:
- a unit 11 for receiving and transmitting information between the server 2 and the users A, B via the bidirectional network 4,
- a unit 12 for triggering recording of at least some information received from the users A, B in a storage space 10 of the server 2 ; in the example represented, these recordings include a list of users LU currently connected to the server 2, a list of particulars regarding contents LC (for example titles, summaries and addresses of files) made available by some of the users and a list of demands LR submitted by some of the users (whether or not they are currently connected) and not yet satisfied ; the unit 12 triggering recording does not itself undertake the recording, but actually activates a module designed for this purpose (not represented for simplicity) ;
- a unit 13 for controlling broadcasting of data stored in the storage space 10 to the users A, B, by the broadcaster 3 ;
- a unit 14 for monitoring connection of users A, B to the server 2;
- a unit 15 for scanning the list of demands LR in the storage space 10, capable of determining, in conjunction with the monitoring unit 14, the demands which can be satisfied ;
- and a unit 16 for downloading the list of contents LC to users via the bidirectional network 4.

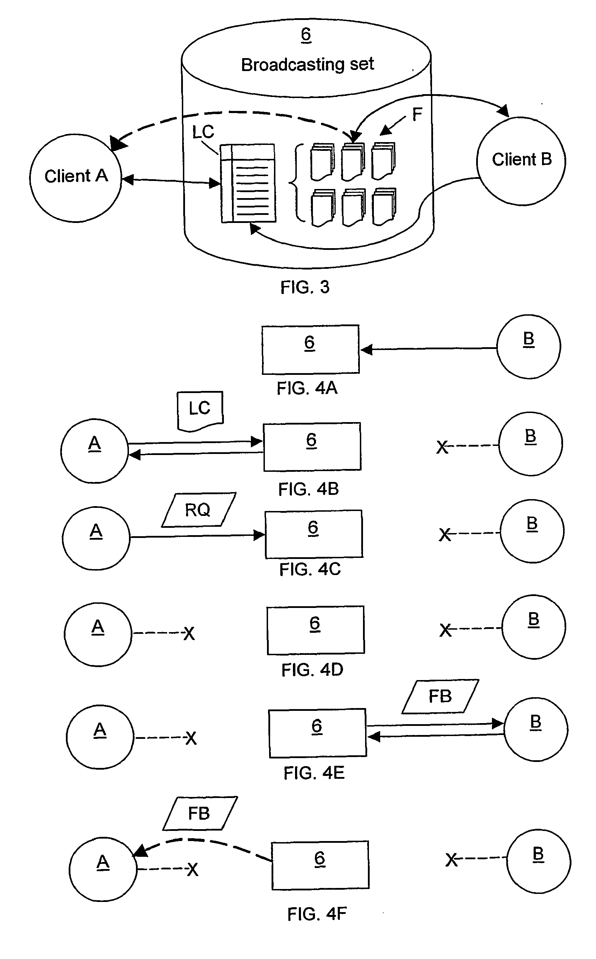

In a first mode of exploitation (Figure 3) of the broadcasting set 6, the latter serves as intermediary between users furnished with storage capabilities (for example Internet TVs fitted with hard disks) for exchanging or sharing files. More precisely, any contents-provider user B indicates to the broadcasting set 6 (through the bidirectional network 4) the files which he makes available to other users, the broadcasting set 6 recording them in its list of contents LC. On demand from any requester user A pertaining to one of the files made available by the provider user B, the broadcasting set 6 then downloads this file into its own storage space 10, then transmits it to the requester user A by broadcasting. In the examples set forth, the users A and B deploy applications of the P2P type (contents downloading and sharing capabilities) via the Internet network.

These various steps are detailed hereinbelow in a basic situation (Figures 4A to 4F). In a first step (Figure 4A), the provider user B starts a client application, which automatically establishes a connection with a server application of the broadcasting set 6. A first item of information sent across this connection is an identifier of the provider user B and his IP address (standing for "Internet Protocol"). The provider user B transmits information regarding a list of shared files to the broadcasting set 6. The broadcasting set 6 records this information in its storage space 10, together with the address of the provider user B and his IP address, by updating the list of contents LC (unit for triggering recording 12). It is thus capable at any time of ascertaining what content is available to the community, where it is and how to reach it.

The files can consist for example of MP3 files (standing for "MPEG1 Audio Layer 3", audio compression format), GIF images (standing for "Graphics Interchange Format", format for storing and transferring compressed graphics images) or HTML pages (standing for "HyperText Markup Language", hypertext scanning language).

In a second step (Figure 4B), a user A connects up to the broadcasting set 6 and asks to consult information regarding the contents accessible at other users. The broadcasting set 6 then downloads the list of contents LC at this user's, via the bidirectional network 4 (downloading unit 16), in such a way that the requester user A can navigate at leisure around the available contents. During this step, the provider user B is not connected, but this is of no consequence to the consultation of the requester user A.

In a third step (Figure 4C), the requester user A, who has tagged a file FB of the provider user B in which he is interested, sends a demand RQ to the broadcasting set 6 to retrieve this file FB. The provider user B is still not connected, so that for the time being, the broadcasting set 6 does not have access to this file FB (no more than the requester user A can access it). The broadcasting set 6 then records this demand RQ in the list of demands LR, following the demands already on standby (unit for triggering recording 12).

In a fourth step (Figure 4D), the broadcasting set 6 regularly monitors the connections of the users so as to find out whether the provider user B is connected and whether the file FB is still made available by the latter (unit 14 for monitoring and 15 for scanning the list of demands LR). At this juncture, neither the requester user A, nor the provider user B are connected any more, so that the broadcasting set 6 is busy acting entirely autonomously in order to be able to satisfy the demand RQ of the requester user A.

In a fifth step (Figure 4E), when the provider user B ends up reconnecting, the broadcasting set 6 tags his presence, makes sure that the file FB is still available, and downloads the latter to its storage space 10 via the bidirectional network 4 (unit for triggering recording 12). The requester user A is not connected at this time, and is therefore quite ignorant of the availability of the file FB at the broadcasting set 6.

In a sixth step (Figure 4F), the broadcasting set 6 telebroadcasts the file FB via the broadcasting network 5. This sending is addressed more precisely to the requester user A by means of an appropriate coding/decoding technique. It matters little whether the requester user A is connected during this transfer. Indeed, the broadcasting set 6 chooses the appropriate time for the downloading of the file FB, while taking account of the available bandwidth.

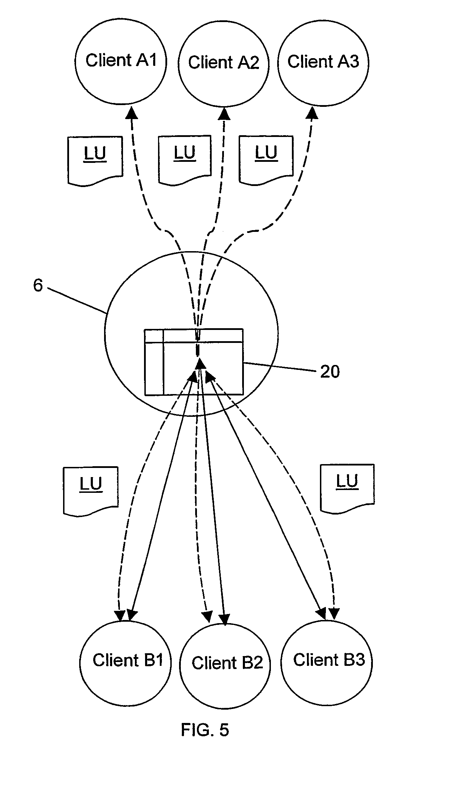

According to a second mode of exploitation (Figure 5) of the broadcasting set 6, the latter hosts a communication service 20, such as a keyboard-chat application (for example instantaneous messaging software of the ICQ type) or a forum application. In the examples described, this service relies on P2P technology, which enables the users to ascertain instantaneously who is present in real time on the service.

The broadcasting set 6 periodically identifies the users B1, B2, B3... connected in respect of this service 20 (monitoring unit 14) and thus updates the list of users LU (unit for triggering recording 12). It communicates this list of users LU by telebroadcasting via the broadcasting network 5. The communication of the list of users LU is either general, that is to say accessible to the set of users, or accessible only to a set of users who have registered for this communication service 20 with the broadcasting set 6, be they the connected users B1, B2, B3... (users "B") or other nonconnected users A1, A2, A3... (users "A"). Each nonconnected user A can thus decide whether or not he connects up, as a function of this list - for example if he discovers friends therein.

In an improved version for which the communication service 20 is a forum service, the broadcasting set 6 also broadcasts the content of the discussions in progress in the forum (the service provider can decide which of the forums forms the subject of a broadcast). The users thus have the possibility of following these discussions without connecting up, or of connecting up so as to participate therein.

## Claims

1. A communication module (1) for inter-user communication over a bidirectional network (4), said module (1) comprising:
- a unit (11) for receiving and transmitting information between a server (2) and users (A, B), via the bidirectional network (4),
- a unit (12) for triggering recording, in at least one storage space (10) of said server (2), of at least some of the information received by the server from the users (A, B),
- and a unit (13) for controlling a broadcasting of data stored in said storage space (10) to the users (A, B), via a broadcasting network (5) independent of the bidirectional network (4), said controlling unit (13) being coupled to said storage space (10) and being coupled to said broadcasting network (5) via broadcasting means (3),
- said module (1) also comprising a unit (14) for monitoring connection of the users (A, B) to the server (2) via the bidirectional network (4),
- **characterized in that** at least one of said units for triggering recording (12) and for controlling broadcasting (13) comprises a function of causing transmission of monitoring information about users' (A,B) connections obtained from said unit (14) for monitoring to the users via said broadcasting means (3) and said broadcasting network (5).

2. The communication module as claimed in claim 1, **characterized in that** said unit for triggering recording (12) is designed to update in said storage space (10) a list (LU) of the users (A, B) connected to the server (2).

3. The communication module as claimed in either of claims 1 and 2, **characterized in that**:
- the unit for triggering recording (12) is capable of triggering the recording in said storage space (10) of demands (RQ) for files (F) by requester users (A) and of triggering the recording in said storage space (10) of said files (F) supplied by provider users (B) when said provider users (B) are connected to the server (2) and said files (F) are available at said provider users (B),
- and the unit for controlling broadcasting (13) is designed to control the sending of said files (F) recorded in said storage space (10) to the requester users (A), in accordance with the demands (RQ) of said requester users (A).

4. The communication module as claimed in claim 3, **characterized in that**:
- the unit for triggering recording (12) is designed to trigger the recording in said storage space (10) of at least one list (LR) of said demands (RQ), said demands (RQ) being advantageously ranked in said list of demands (LR) according to an order of receipt of the demands (RQ) by the server (2),
- and said communication module (1) comprises a unit (15) for periodic scanning of said list of demands (LR), which is capable of verifying sequentially in said list (LR) the demands (RQ) which can be satisfied, by availability of the corresponding files (F) at provider users (B) and by connection of said provider users (B), and of activating the unit for triggering recording (12) accordingly.

5. The communication module as claimed in either of claims 3 and 4, **characterized in that**:
- the unit for triggering recording (12) is designed to trigger the recording in said storage space (10), supplied by provider users (B), of particulars regarding content and addressing (LC) of the files (F) available at the provider users (B),
- and said communication module (1) comprises a downloading unit (16), capable of downloading at least said particulars regarding content (LC) to the requester users (A) on demands of said requester users (A).

6. The communication module as claimed in any one of the preceding claims, **characterized in that** the unit for controlling broadcasting (13) is capable of controlling the sending of at least one list of users (LU) currently connected to the server (2) via at least one communication service (20).

7. The communication module as claimed in claim 6, **characterized in that** at least one of said communication services being a forum application, the unit for controlling broadcasting (13) is designed also to control the sending of contents exchanged via said forum service.

8. The communication module as claimed in any one of the preceding claims, **characterized in that** said communication module (1) is designed for a technology of station-to-station exchanges between said users (A, B) over said bidirectional network (4).

9. A server (2) **characterized in that** it comprises a communication module (1) in accordance with any one of claims 1 to 8.

10. The server (2) of claim 9, **characterized in that** said server is provided for users being able to connect to said server (2) via at least one keyboard-chat application, the unit for controlling broadcasting (13) of said communication module (1) being capable of controlling the sending of at least one list of users (LU), currently connected to the server (2) via said keyboard-chat application.

11. The server (2) according to any of claims 9 or 10, **characterized in that** said server is provided for users being able to connect to said server (2) via at least one forum application, the unit for controlling broadcasting (13) of said communication module (1) being capable of controlling the sending of at least one list of users (LU), currently connected to the server (2) via said forum application.

12. A broadcasting set (6), **characterized in that** it comprises a server (2) in accordance with any of claims 9 to 11.

13. A process for inter-user communication over a bidirectional network (4), said process comprising:
a step of triggering recording in at least one storage space (10), of information received by a server (2) from users (A, B) via the bidirectional network (4),
- a step of controlling broadcasting of data stored in said storage space (10) to the users (A, B), via broadcasting means (3) and a broadcasting network (5) independent of the bidirectional network (4),
- and a step of monitoring, by a unit (14) for monitoring, the connections of the users (A, B) to the server (2) via the bidirectional network (4),
- **characterized in that** said steps of triggering recording and/or of controlling broadcasting comprise a function of causing transmission of monitoring information about users' (A,B) connections obtained from said unit (14) for monitoring to the users via said broadcasting means (3) and said broadcasting network (5).

## Patentansprüche

1. Kommunikationsmodul (1) für die Kommunikation zwischen Nutzern über ein bidirektionales Netz (4), wobei das Modul (1) umfasst:
- eine Einheit (11) zum Empfangen und Senden von Informationen zwischen einem Server (2) und Nutzern (A, B) über das bidirektionale Netz (4),
- eine Einheit (12) zum Auslösen der Aufzeichnung mindestens eines Teils der durch den Server von den Nutzern (A, B) empfangenen Informationen in mindestens einem Speicherplatz (10) des Servers (2),
- und eine Einheit (13) zum Steuern einer Ausstrahlung von in dem Speicherplatz (10) gespeicherten Daten zu den Nutzern (A, B) über ein Rundfunknetz (5) unabhängig von dem bidirektionalen Netz (4), wobei die Steuereinheit (13) mit dem Speicherplatz (10) gekoppelt ist und über Rundfunkmittel (3) mit dem Rundfunknetz (5) gekoppelt ist,
- wobei das Modul (1) außerdem eine Einheit (14) zum Überwachen der Verbindung der Nutzer (A, B) mit dem Server (2) über das bidirektionale Netz (4) umfasst,
**dadurch gekennzeichnet, dass**
mindestens eine der Einheiten zum Auslösen der Aufzeichnung (12) und zum Steuern der Ausstrahlung (13) eine Funktion zum Veranlassen der Übertragung von von der Einheit (14) zum Überwachen erhaltenen Überwachungsinformation über Verbindungen von Nutzern (A, B) zu den Nutzern über die Rundfunkmittel (3) und das Rundfunknetz (5) umfasst.

2. Kommunikationsmodul nach Anspruch 1, **dadurch gekennzeichnet, dass** die Einheit zum Auslösen der Aufzeichnung (12) zum Aktualisieren einer Liste (LU) der mit dem Server (2) verbundenen Nutzer (A, B) in dem Speicherplatz (10) ausgelegt ist.

3. Kommunikationsmodul nach einem der Ansprüche 1 und 2,
**dadurch gekennzeichnet, dass**
- die Einheit zum Auslösen der Aufzeichnung (12) das Aufzeichnen von Anforderungen (RQ) für Dateien (F) durch Anforderernutzer (A) in dem Speicherplatz (10) auslösen kann und das Aufzeichnen der durch Anbieternutzer (B) gelieferten Dateien (F) in dem Speicherplatz (10) auslösen kann, wenn die Anbieternutzer (B) mit dem Server (2) verbunden sind und die Dateien (F) bei den Anbieternutzern (B) verfügbar sind,
- und die Einheit zum Steuern des Ausstrahlens (13) zum Steuern des Sendens der in dem Speicherplatz (10) aufgezeichneten Dateien (F) zu den Anforderernutzern (A) in Übereinstimmung mit den Anforderungen (RQ) der Anforderernutzer (A) ausgelegt ist.

4. Kommunikationsmodul nach Anspruch 3, **dadurch gekennzeichnet, dass**
- die Einheit zum Auslösen der Aufzeichnung (12) zum Auslösen der Aufzeichnung mindestens einer Liste (LR) der Anforderungen (RQ) in dem Speicherplatz (10) ausgelegt ist, wobei die Anforderungen (RQ) in der Liste der Anforderungen (RQ) vorteilhaft in Übereinstimmung mit einer Reihenfolge des Empfangs der Anforderungen (LR) durch den Server (2) geordnet werden,
- und das Kommunikationsmodul (1) eine Einheit (15) zum periodischen Abtasten der Liste (LR) von Anforderungen umfasst, die in der Liste (LR) die Anforderungen (RQ), die durch Verfügbarkeit der entsprechenden Dateien (F) bei Anbieternutzern (B) und durch Verbindung der Anbieternutzer (B) erfüllt werden können, aufeinanderfolgend überprüfen kann und die Einheit zum Auslösen der Aufzeichnung (12) dementsprechend aktivieren kann.

5. Kommunikationsmodul nach einem der Ansprüche 3 und 4,
**dadurch gekennzeichnet, dass**.
- die Einheit zum Auslösen der Aufzeichnung (12) zum Auslösen der Aufzeichnung durch Anbieternutzer (B) gelieferter Einzelheiten hinsichtlich Inhalt und Adressierung (LC) der bei den Anbieternutzern (B) verfügbaren Dateien (F) in dem Speicherplatz (10) ausgelegt ist,
- und das Kommunikationsmodul (1) eine Herunterladeeinheit (16) umfasst, die auf Anforderungen der Anforderernutzer (A) mindestens die Einzelheiten hinsichtlich Inhalts (LC) zu den Anforderernutzern (A) herunterladen kann.

6. Kommunikationsmodul nach einem der vorhergehenden Ansprüche, **dadurch gekennzeichnet, dass** die Einheit zum Steuern des Ausstrahlens (13) das Senden mindestens einer Liste von gegenwärtig mit dem Server (2) verbundenen Nutzern (LU) über mindesten einen Kommunikationsdienst (20) steuern kann.

7. Kommunikationsmodul nach Anspruch 6, **dadurch gekennzeichnet, dass** mindestens einer der Kommunikationsdienste eine Forumanwendung ist, wobei die Einheit zum Steuern des Ausstrahlens (13) auch zum Steuern des Sendens von über den Forumdienst austauschten Inhalten ausgelegt ist.

8. Kommunikationsmodul nach einem der vorhergehenden Ansprüche, **dadurch gekennzeichnet, dass** das Kommunikationsmodul (1) für eine Technologie von Austauschen von Station zu Station zwischen den Nutzern (A, B) über das bidirektionale Netz (4) ausgelegt ist.

9. Server (2), **dadurch gekennzeichnet, dass** er ein Kommunikationsmodul (1) in Übereinstimmung mit einem der Ansprüche 1 bis 8 umfasst.

10. Server (2) nach Anspruch 9, **dadurch gekennzeichnet, dass** der Server für Nutzer vorgesehen ist, die sich über mindestens eine Tastatur-Chat-Anwendung mit dem Server (2) verbinden können, wobei die Einheit zum Steuern des Ausstrahlens (13) des Kommunikationsmoduls (1) das Senden mindestens einer Liste von Nutzern (LU), die gegenwärtig mit dem Server (2) verbunden sind, über die Tastatur-Chat-Anwendung steuern kann.

11. Server (2) nach einem der Ansprüche 9 oder 10, **dadurch gekennzeichnet, dass** der Server für Nutzer vorgesehen ist, die sich über mindestens eine Forumanwendung mit dem Server (2) verbinden können, wobei die Einheit zum Steuern des Ausstrahlens (13) des Kommunikationsmoduls (1) das Senden mindestens einer Liste von Nutzern (LU), die gegenwärtig mit dem Server (2) verbunden sind, über die Forumanwendung steuern kann.

12. Rundfunkanlage (6), **dadurch gekennzeichnet, dass** sie einen Server (2) in Übereinstimmung mit einem der Ansprüche 9 bis 11 umfasst.

13. Verfahren für die Kommunikation zwischen Nutzern über ein bidirektionales Netz (4), wobei das Verfahren umfasst:
einen Schritt zum Auslösen der Aufzeichnung von durch einen Server (2) von Nutzern (A, B) über das bidirektionale Netz (4) empfangenen Informationen in mindestens einen Speicherplatz (10),
- einen Schritt zum Steuern des Ausstrahlens von in dem Speicherplatz (10) gespeicherten Daten zu den Nutzern (A, B) über Rundfunkmittel (3) und ein Rundfunknetz (5) unabhängig von dem bidirektionalen Netz (4),
- und einen Schritt zum Überwachen der Verbindungen der Nutzer (A, B) mit dem Server (2) über das bidirektionale Netz (4) durch eine Einheit (14) zum Überwachen,
**dadurch gekennzeichnet, dass**
die Schritte zum Auslösen der Aufzeichnung und/oder zum Steuern des Ausstrahlens eine Funktion umfassen, die die Sendung von von der Einheit (14) zum Überwachen erhaltenen Überwachungsinformationen über Verbindungen von Nutzern (A, B) zu den Nutzern über die Rundfunkmittel (3) und das Rundfunknetz (5) veranlasst.

## Revendications

1. Module de communication (1) pour une communication inter-utilisateurs sur un réseau bidirectionnel (4), ledit module (1) comprenant :
- une unité (11) pour recevoir et transmettre des informations entre un serveur (2) et des utilisateurs (A, B), via le réseau bidirectionnel (4),
- une unité (12) pour déclencher l'enregistrement, dans au moins un espace de stockage (10) dudit serveur (2), d'au moins certaines des informations reçues par le serveur à partir des utilisateurs (A, B),
- et une unité (13) pour commander une diffusion de données stockées dans ledit espace de stockage (10) aux utilisateurs (A, B), via un réseau de diffusion (5) indépendant du réseau bidirectionnel (4), ladite unité de commande (13) étant couplée audit espace de stockage (10) et étant couplée audit réseau de diffusion (5) via un moyen de diffusion (3),
- ledit module (1) comprenant également une unité (14) pour surveiller la connexion des utilisateurs (A, B) au serveur (2) via le réseau bidirectionnel (4),
- **caractérisé en ce qu'**au moins une desdites unités pour déclencher un enregistrement (12) et pour commander une diffusion (13) comprend une fonction permettant d'entraîner une transmission d'informations de surveillance relatives aux connexions des utilisateurs (A, B), obtenues à partir de ladite unité (14) de surveillance, aux utilisateurs via ledit moyen de diffusion (3) et ledit réseau de diffusion (5).

2. Module de communication selon la revendication 1, **caractérisé en ce que** ladite unité pour déclencher un enregistrement (12) est conçue pour mettre à jour dans ledit espace de stockage (10) une liste (LU) des utilisateurs (A, B) connectés au serveur (2)

3. Module de communication selon une quelconque des revendications 1 et 2, **caractérisé en ce que** :
- l'unité pour déclencher un enregistrement (12) est capable de déclencher l'enregistrement, dans ledit espace de stockage (10), de demandes (RQ) de fichiers (F) par des utilisateurs demandeurs (A) et de déclencher l'enregistrement, dans ledit espace de stockage (10), desdits fichiers (F) fournis par des utilisateurs fournisseurs (B) lorsque lesdits utilisateurs fournisseurs (B) sont connectés au serveur (2) et lesdits fichiers (F) sont disponibles au niveau desdits utilisateurs fournisseurs (B),
- et l'unité pour commander une diffusion (13) est conçue pour commander l'envoi desdits fichiers (F) enregistrés dans ledit espace de stockage (10) aux utilisateurs demandeurs (A), en fonction des demandes (RQ) desdits utilisateurs demandeurs (A).

4. Module de communication selon la revendication 3, **caractérisé en ce que** :
- l'unité pour déclencher un enregistrement (12) est conçue pour déclencher l'enregistrement, dans ledit espace de stockage (10), d'au moins une liste (LR) desdites demandes (RQ), lesdites demandes (RQ) étant classées de manière avantageuse dans ladite liste de demandes (LR) selon un ordre de réception des demandes (RQ) par le serveur (2),
- et ledit module de communication (1) comprend une unité (15) pour une analyse périodique de ladite liste de demandes (LR), laquelle est capable de vérifier de manière séquentielle dans ladite liste (LR) les demandes (RQ) pouvant être satisfaites, par une disponibilité des fichiers correspondants (F) au niveau des utilisateurs fournisseurs (B) et par une connexion desdits utilisateurs fournisseurs (B), et d'activer l'unité pour déclencher un enregistrement (12) en conséquence.

5. Module de communication selon une quelconque des revendications 3 et 4, **caractérisé en ce que** :
- l'unité pour déclencher un enregistrement (12) est conçue pour déclencher l'enregistrement dans ledit espace de stockage (10), fourni par des utilisateurs fournisseurs (B), de particularités concernant le contenu et l'adressage (LC) des fichiers (F) disponibles au niveau des utilisateurs fournisseurs (B),
- et ledit module de communication (1) comprend une unité de téléchargement (16), capable de télécharger au moins lesdites particularités concernant le contenu (LC) vers les utilisateurs demandeurs (A) en cas de demandes desdits utilisateurs demandeurs (A).

6. Module de communication selon une quelconque des revendications précédentes, **caractérisé en ce que** l'unité pour commander une diffusion (13) est capable de commander l'envoi d'au moins une liste d'utilisateurs (LU) actuellement connectés au serveur (2) via au moins un service de communication (20).

7. Module de communication selon la revendication 6, **caractérisé en ce qu'**au moins un desdits services de communication étant une application de forum, l'unité pour commander une diffusion (13) est également conçue pour commander l'envoi de contenus échangés via ledit service de forum.

8. Module de communication selon une quelconque des revendications précédentes, **caractérisé en ce que** ledit module de communication (1) est conçu pour une technologie d'échanges poste-à-poste entre lesdits utilisateurs (A, B) sur ledit réseau bidirectionnel (4).

9. Serveur (2) **caractérisé en ce qu'**il comprend un module de communication (1) selon une quelconque des revendications 1 à 8.

10. Serveur (2) selon la revendication 9, **caractérisé en ce que** ledit serveur est fourni pour des utilisateurs en mesure de se connecter audit serveur (2) via au moins une application de discussion par clavier, l'unité pour commander une diffusion (13) dudit module de communication (1) étant capable de commander l'envoi d'au moins une liste d'utilisateurs (LU), actuellement connectés au serveur (2) via ladite application de discussion par clavier.

11. Serveur (2) selon une quelconque des revendications 9 ou 10, **caractérisé en ce que** ledit serveur est fourni pour des utilisateurs en mesure de se connecter audit serveur (2) via au moins une application de forum, l'unité pour commander une diffusion (13) dudit module de communication (1) étant capable de commander l'envoi d'au moins une liste d'utilisateurs (LU), actuellement connectés au serveur (2) via ladite application de forum.

12. Poste de diffusion (6), **caractérisé en ce qu'**il comprend un serveur (2) selon une quelconque des revendications 9 à 11.

13. Processus pour une communication inter-utilisateurs sur un réseau bidirectionnel (4), ledit processus comprenant :
- une étape de déclenchement de l'enregistrement, dans au moins un espace de stockage (10), d'informations reçues par un serveur (2) à partir d'utilisateurs (A, B) via le réseau bidirectionnel (4),
- une étape de commande d'une diffusion de données stockées dans ledit espace de stockage (10) aux utilisateurs (A, B), via un moyen de diffusion (3) et un réseau de diffusion (5) indépendant du réseau bidirectionnel (4),
- et une étape de surveillance, par une unité (14) de surveillance, des connexions des utilisateurs (A, B) au serveur (2) via le réseau bidirectionnel (4),
- **caractérisé en ce que** lesdites étapes de déclenchement d'un enregistrement et/ou de commande d'une diffusion comprennent une fonction permettant d'entraîner une transmission d'informations de surveillance relatives aux connexions des utilisateurs (A, B), obtenues à partir de ladite unité (14) de surveillance, aux utilisateurs via ledit moyen de diffusion (3) et ledit réseau de diffusion (5).
